(19) Europäisches Patentamt
European Patent Office
Office européen des brevets

(11) Veröffentlichungsnummer: **0 085 913**
**B1**

# (12) EUROPÄISCHE PATENTSCHRIFT

(45) Veröffentlichungstag der Patentschrift: **13.05.87**

(51) Int. Cl.[4]: **C 08 G 63/76**, C 08 G 59/42

(21) Anmeldenummer: **83100790.1**

(22) Anmeldetag: **28.01.83**

(54) **Reaktive carboxylgruppenhaltige Polymere, Verfahren zu ihrer Herstellung und ihre Verwendung als Bindemittelkomponente für Pulverlacke.**

(30) Priorität: **09.02.82 DE 3204333**

(43) Veröffentlichungstag der Anmeldung: **17.08.83 Patentblatt 83/33**

(45) Bekanntmachung des Hinweises auf die Patenterteilung: **13.05.87 Patentblatt 87/20**

(84) Benannte Vertragsstaaten: **AT BE CH DE FR GB IT LI NL SE**

(56) Entgegenhaltungen:
**DE - A - 2 324 696**
**DE - A - 2 609 361**
**DE - A - 2 758 006**
**FR - A - 2 377 434**
**US - A - 3 641 103**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Meyer, Rolf-Volker, Dr., Buchheimer Strasse 23, D-4150 Krefeld (DE)**
Erfinder: **Kreuder, Hans-Joachim, Dr., Doerperhofstrasse 35, D-4150 Krefeld (DE)**
Erfinder: **Höhlein, Peter, Dr., Windhmühlenweg 3e, D-4152 Kempen 3 (DE)**

EP 0 085 913 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft reaktive carboxylgruppenhaltige Polymere, vorzugsweise Polyesterpolycarbonsäuren, ein Verfahren zu ihrer Herstellung und ihre Verwendung als Bindemittelkomponente für Pulverlacke, die durch Polyepoxide gehärtet werden.

Pulverförmige Überzugsmittel, die durch Wirbelsintern, durch Flammspritzen oder nach dem elektrostatischen Pulversprühverfahren auf ein Substrat aufgebracht werden können, sind bekannt. Sie sollen bei mässig hohen Temperaturen innerhalb möglichst kurzer Zeit zu vernetzten Beschichtungen eingebrannt werden können. Dabei ist zu beachten, dass einerseits beim Extrudieren der Mischung aus Bindemittel, Pigmenten, Füllstoffen und gegebenenfalls weiteren Hilfsmitteln bei Temperaturen von 80 bis 140 °C, vorzugsweise 90 bis 120 °C, keine Reaktion zwischen Harz und Härter stattfinden darf, andererseits aber ein Bedürfnis nach immer kürzeren Einbrennzeiten bei niedrigen Temperaturen, also nach erhöhter Reaktivität besteht.

Es ist zwar möglich, die Harzkomponente mit einer derart hohen Anzahl von Carboxylgruppen zu versehen, dass bei Einbrennbedingungen von 150–160 °C/30 Minuten eine vollständige Reaktion erzielt wird; allerdings tritt aufgrund der hohen Säurezahl schon während des Extrusionsvorgangs eine unerwünschte Vorreaktion ein, die sich nur durch energisches Abkühlen des Extrudats in tolerierbaren Grenzen halten lässt. Auch die Lagerfähigkeit wird dadurch beeinträchtigt, dass selbst bei Raumtemperatur eine unerwünschte Reaktion abläuft, die dann den Verlauf des Pulverlacks und/oder die mechanischen Eigenschaften der Einbrennlackierung negativ beeinflusst. Dieses Verhalten der carboxylgruppenhaltigen Polymeren ist weitgehend unabhängig von der Wahl des für die Härtungsreaktion notwendigen Polyepoxids und ist z. B. sowohl bei Trisglycidylisocyanurat als auch bei Trisglycidylurazol zu beobachten.

Bekanntlich kann man die Härtung von carboxylgruppenhaltigen Polymeren mit Polyepoxiden durch Katalysatoren, wie Dicyandiamide, oder Stickstoffheterocyclen, wie Imidazoline (DE-OS 2 248 776) oder Tetrahydropyrimidine (DE-OS 2 751 805), beschleunigen. Es empfiehlt sich jedoch, die basischen Katalysatoren mit z. B. Isocyanaten zu blockieren, damit unerwünschte Vernetzungen bei der Herstellung des einbrennfähigen Pulverlacks (Mahlen und Homogenisieren der einzelnen Komponenten bei ca. 80 bis 140 °C im Extruder) vermieden werden. Der schwierigste Schritt einer derartigen Verfahrensweise liegt in der gleichmässigen Verteilung der nur in geringen Mengen notwendigen Katalysatoren, die für den gleichmässigen Verlauf des Pulverlacks und für eine konstante Beschichtungsqualität erforderlich ist.

Die FR-A-2 377 434 betrifft Pulverlacke auf Basis von sauren Polyestern und Polyepoxiden, die Imidazole oder Imidazoline als Härtungsaktivatoren enthalten. Die erfindungsgemäss verwendeten Amidine A, B und C verleihen den Bindemitteln eine höhere Reaktivität als die Imidazole und Imidazoline der FR-A-2 377 434.

Imidazole und ähnliche Verbindungen werden für den gleichen Zweck auch in der DE-OS 2 609 361 empfohlen.

Ferner ist aus der DE-OS 2 324 696 ein Verfahren zur Herstellung matter Überzüge auf Basis von Pulverlacken bekannt, wonach man zur Erzielung einer matten Oberfläche Polyepoxide und Salze mindestens 3-basischer Carbonsäuren, wie Trimellithsäure, Pyromellithsäure, Butantetracarbonsäure, Cyclopentantetracarbonsäure, und bestimmter Amidine, vorzugsweise von 2-Phenylimidazolin, miteinander umsetzt. Die Pulverlacke dieser Druckschrift führen jedoch mit langkettigen Epoxiden zu schlechtem Glanz und mit kurzkettigen Epoxiden zu spröden Beschichtungen.

Aufgabe der Erfindung war daher das Bereitstellen von Pulverlacksystemen, die die geschilderten Nachteile nicht aufweisen.

Überraschenderweise wurde gefunden, dass carboxylgruppenhaltige Polymere diese Aufgabe dann erfüllen, wenn sie mit bestimmten organischen Stickstoffbasen teilweise neutralisiert sind.

Gegenstand der Erfindung sind reaktive carboxylgruppenhaltige Polymere, vorzugsweise Polyesterpolycarbonsäuren, mit mittleren Molekulargewichten $\bar{M}_n$ von 2500 bis 25 000, vorzugsweise von 3000 bis 20 000, wobei 0,1 bis 25%, vorzugsweise 2 bis 15%, der zunächst vorhandenen Carboxylgruppen der Polymeren als Salz mindestens einer organischen Stickstoffbase vorliegen, dadurch gekennzeichnet, dass die organische Stickstoffbase entweder

A. ein Guanidin der Formel

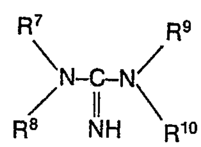

worin

$R^7$, $R^8$, $R^9$, $R^{10}$ unabhängig voneinander ein Wasserstoffatom, einen $C_1$–$C_{12}$-Alkylrest, einen $C_5$–$C_{12}$-Cycloalkylrest, einen $C_7$–$C_{12}$-Aralkylrest, einen $C_6$–$C_{12}$-Arylrest, vorzugsweise einen $C_1$–$C_4$-Alkylrest und einen Phenylrest, bedeuten, oder

B. ein Tetrahydropyrimidin der Formel

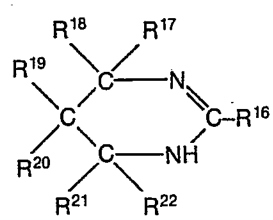

worin

$R^{16}$ bis $R^{22}$ unabhängig voneinander ein Wasserstoffatom, einen Alkylrest mit 1 bis 6 C-Atomen, einen Cycloalkylrest mit 5 bis 10 C-Atomen, einen Aralkylrest mit 7 bis 12 C-Atomen und einen Arylrest mit 6 bis 15 C-Atomen bedeuten,

wobei auch zwei geminale oder vicinale Substituenten zusammen mit dem Kohlenstoffatom, an dem sie sitzen, einen cycloaliphatischen Ring mit 5 bis 6 C-Atomen bilden können,
oder

C. ein bicyclisches Amidin der Formel

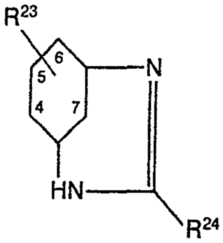

ist, worin
$R^{23}$ ein Wasserstoffatom oder eine Methylgruppe und
$R^{24}$ ein Wasserstoffatom, eine $C_1$–$C_{22}$-Alkylgruppe oder einen Phenylrest bedeuten.

Das als Zahlenmittel bestimmte Molekulargewicht $\bar{M}_n$ bezieht sich auf die Polymeren vor der Salzbildung und wird bis zu Molekulargewichten von 5000 dampfdruckosmometrisch, bei Molekulargewichten von über 5000 membranosmometrisch, jeweils mit Aceton als Lösungsmittel, bestimmt.

Weiterer Gegenstand der Erfindung ist ein Verfahren zur Herstellung von reaktiven carboxylgruppenhaltigen Polymeren, wobei man mindestens ein carboxylgruppenhaltiges Polymeres mit mittleren Molekulargewichten $\bar{M}_n$ von 2500 bis 25 000, vorzugsweise von 3000 bis 20 000, und mit Säurezahlen von 10 bis 150 mit mindestens einer organischen Stickstoffbase bei einer Temperatur von 170 bis 250, vorzugsweise von 180 bis 210 °C, in solchen Mengenverhältnissen umsetzt, dass 0,1 bis 25%, vorzugsweise 2 bis 15%, der Carboxylgruppen des Polymeren mit der Stickstoffbase unter Salzbildung reagieren, dadurch gekennzeichnet, dass die organische Stickstoffbase A, B oder C – definiert wie in Anspruch 1 – ist.

Die Reaktionszeiten betragen – je nach Art der carboxylgruppenhaltigen Polymeren, der Stickstoffbasen und der Reaktionstemperaturen – 10 Minuten bis 5 Stunden, vorzugsweise 30 Minuten bis 2 Stunden.

Weiterer Gegenstand der Erfindung ist schliesslich die Verwendung der erfindungsgemässen reaktiven carboxylgruppenhaltigen Polymeren als Bindemittelkomponente für Pulverlacke, die durch Polyepoxide gehärtet werden.

Die zur Salzbildung zu verwendenden carboxylgruppenhaltigen Polymeren sind vorzugsweise Polyesterpolycarbonsäuren, welche aus Polyolen und Polycarbonsäuren bzw. deren Derivaten oder aus Hydroxycarbonsäuren hergestellt werden.

Die zur Salzbildung zu verwendenden carboxylgruppenhaltigen Polymeren sollen einen Schmelz- bzw. Erweichungspunkt (bestimmt durch Differentialthermoanalyse) im Bereich von vorzugsweise 20 °C–150 °C, insbesondere von 50 °C–100 °C, eine Säurezahl von vorzugsweise 20–120, insbesondere von 30–50, und OH-Zahlen von vorzugsweise unter 30, insbesondere unter 10, besitzen.

Zur Herstellung der zur Salzbildung zu verwendenden Polyesterpolycarbonsäuren einzusetzende Polycarbonsäuren sind insbesondere solche der allgemeinen Formel

$$A(-COOH)_x \qquad (I)$$

wobei A eine Bindung (bei x = 2) oder einen x-wertigen, gegebenenfalls substituierten aliphatischen Rest mit vorzugsweise 1–20 C-Atomen, einen cycloaliphatischen Rest mit vorzugsweise 5–16 C-Atomen, einen aliphatischaromatischen Rest mit vorzugsweise 7–20 C-Atomen, einen aromatischen Rest mit vorzugsweise 6–15 C-Atomen, oder einen Heteroatome, wie N, O oder S, im Ring enthaltenden aromatischen oder cycloaliphatischen Rest mit 2–12 C-Atomen und x eine ganze Zahl von 2 bis 4, vorzugsweise 2 und 3, bedeuten.

Bevorzugte derartige Polycarbonsäuren sind beispielsweise:
Oxalsäure, Malonsäure, Bernsteinsäure,
Glutarsäure, Adipin-, Trimethyladipin-,
Azelain-, Sebacinsäure, Decandicarbonsäure,
Dodecandicarbonsäure, Fumarsäure,
Maleinsäure,
Hexahydroterephthalsäure, Phthalsäure,
Isophthalsäure, Terephthalsäure,
Benzol-1,3,5-tricarbonsäure,
Benzol-1,2,4-tricarbonsäure,
Benzol-1,2,3-tricarbonsäure,
Naphthalin-1,5-dicarbonsäure,
Benzophenon-4,4′-dicarbonsäure,
Diphenyl-sulfon-4,4′-dicarbonsäure,
Butantetracarbonsäure, Tricarballylsäure,
Ethylentetracarbonsäure, Pyromellithsäure,
Benzol-1,2,3,4-tetracarbonsäure,
Benzol-1,2,3,5-tetracarbonsäure sowie

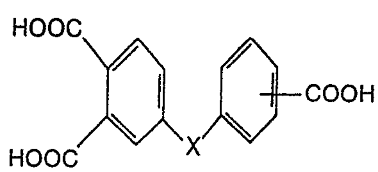 bzw. 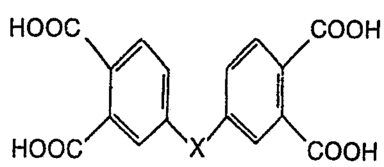

mit X = 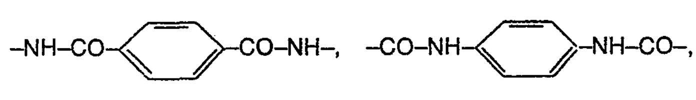

$-O-$, $-S-$, $-SO_2-$, $-CO-$, $-N=N-$, $-CH_2-$, 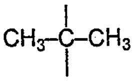

Als Hydroxycarbonsäuren sind solche der Formel

$$(HOOC-)_y\ A(-OH)_z \qquad (II)$$

bevorzugt, in der A die oben angeführten Bedeutungen hat und y sowie z unabhängig voneinander eine ganze Zahl von 1 bis 3, vorzugsweise 1 oder 2, sein können.

Bevorzugte Beispiele sind Glykolsäure, Milchsäure, Mandelsäure, Äpfelsäure, Zitronensäure, Weinsäure, 2-, 3- und 4-Hydroxybenzoesäure sowie Hydroxybenzoldicarbonsäuren.

Zur Herstellung der Polyesterpolycarbonsäuren einzusetzende Polyole sind insbesondere solche der Formel

$$B(-OH)_a \qquad (III)$$

wobei B einen a-wertigen aliphatischen Rest mit 2 bis 20 C-Atomen, einen cycloaliphatischen Rest mit 5 bis 16 C-Atomen, einen araliphatischen Rest mit 7 bis 20 C-Atomen, einen aromatischen Rest mit 6 bis 15 C-Atomen und einen N, O oder S enthaltenden heterocyclischen Rest mit 2 bis 12 C-Atomen und a eine ganze Zahl von 2 bis 6, vorzugsweise 2 oder 3, bedeuten.

Als bevorzugte derartige Polyole seien aufgeführt:

Ethylenglykol, 1,2- und 1,3-Propandiol,
1,2-, 1,3-, 1,4- und 2,3-Butandiol,
1,5-Pentandiol, 2,2-Dimethyl-1,3-propandiol,
1,6- und 2,5-Hexandiol, 1,12-Dodecandiol,
1,12-Octadecandiol,
2,2,4- und 2,4,4-Trimethyl-1,6-hexandiol,
Trimethylolpropan, Trimethylolethan, Glycerin,
1,2,6-Hexantriol, Pentaerythrit, Mannit,
1,4-Bis-hydroxymethyl-cyclohexan,
Cyclohexan-1,4-diol,
2,2-Bis-(4-hydroxycyclohexyl)-propan,
Bis-(4-hydroxyphenyl)-methan,
Bis-(4-hydroxyphenyl)-sulfon,
1,4-Bis-hydroxymethyl-benzol,
1,4-Dihydroxybenzol,
2,2-Bis-(4-hydroxyphenyl)-propan,
1,3-Bis-hydroxyalkylhydantoine,
Trishydroxyalkylisocyanurate und
Trishydroxyalkyltriazolidin-3,5-dione.

Weitere zur Herstellung der Polyesterpolycarbonsäuren geeignete Polyole sind die durch Addition von gegebenenfalls substituierten Alkylenoxiden wie Ethylenoxid, Propylenoxid, Butylenoxid, Styroloxid an die oben erwähnten Polyole entstandenen Hydroxyalkylether der Formel

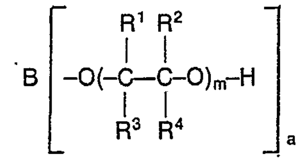

(IV)

worin

B und a die oben angegebene Bedeutung haben,

m für eine ganze Zahl von 1 bis 7 und

$R^1$, $R^2$, $R^3$ und $R^4$ unabhängig voneinander für Wasserstoffatome, gegebenenfalls mit Halogen substituierte aliphatische $C_1$–$C_{10}$-Reste, cycloaliphatische $C_4$–$C_8$-Reste, araliphatische $C_7$–$C_{17}$-Reste oder gegebenenfalls mit Halogen, Alkyl und/oder Alkoxy substituierte aromatische $C_6$–$C_{16}$-Reste stehen. Vorzugsweise bedeuten $R^1$, $R^2$, $R^3$ und $R^4$ Wasserstoff, Alkylreste mit 1 bis 4 C-Atomen, vorzugsweise Methyl, Ethyl oder gegebenenfalls mit Halogenatomen (Chlor, Brom), $C_1$–$C_4$-Alkylresten und/oder mit $C_1$–$C_4$-Alkoxygruppen substituierte $C_6$–$C_{12}$-Arylreste, insbesondere aber Phenyl.

Bevorzugte derartige Polyole sind beispielsweise:

Diethylenglykol, Triethylenglykol,
Dipropylenglykol, Tripropylenglykol,
Dibutylenglykol,
1,4-Bis-(2-hydroxy-ethoxy)-cyclohexan,
1,4-Bis-(2-hydroxy-ethoxy)-benzol,
4,4'-Bis-(2-hydroxyethoxy)-diphenylmethan,
-2-diphenyl-propan, -diphenylether,
-diphenylsulfon, -diphenyl-keton und -diphenylcyclohexan.

Selbstverständlich können die einzusetzenden Carbonsäuren bzw. Carbonsäurederivate und die zu verwendenden Polyole auch oligomerer Natur sein. So können hier beispielsweise aromatische Dicarbonsäureester der Strukturformel

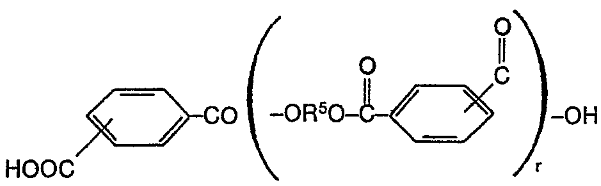

(V)

und aliphatische Dicarbonsäureester der Strukturformel

$$HOOC(-CH_2)_s-CO[OR^6-OOC(-CH_2)_t-CO]_r\ OH$$

eingesetzt werden, worin

$R^5$ und $R^6$ einen mindestens zweiwertigen aromatischen Rest mit 6 bis 15 C-Atomen, einen araliphatischen Rest mit 7 bis 20 C-Atomen, einen gesättigten oder ungesättigten aliphatischen Rest mit 2 bis 20 C-Atomen, einen cycloaliphatischen Rest mit 5 bis 15 C-Atomen, der jeweils mit aromatischen ($C_6$–$C_{12}$), cycloaliphatischen ($C_4$–$C_{12}$) oder heterocyclischen ($C_2$–$C_{12}$) Ringsystemen kondensiert sein sowie Ether-, Keto-, Ester- oder Sulfobrücken enthalten kann und gegebenenfalls durch Halogen, Nitro- oder Alkoxygruppen mit 1 bis 20 C-Atomen substituiert ist,

r eine ganze Zahl von 1 bis 20,

s und t unabhängig voneinander Null oder eine ganze Zahl von 1 bis 20 bedeuten.

Bevorzugte Beispiele für $(R^5)_r$ bzw. $(R^6)_r$ sind:

$-(CH_2)_2-$, $-(CH_2)_5-$, 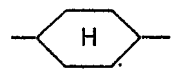 , 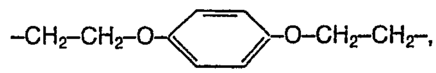

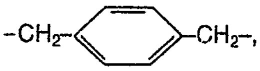 , $-(CH_2)_2-O-(CH_2)_2-$, 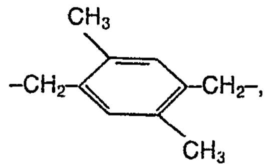

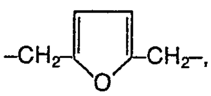 , 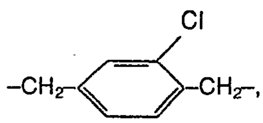 , $-CH_2-CH=CH-CH_2-$,

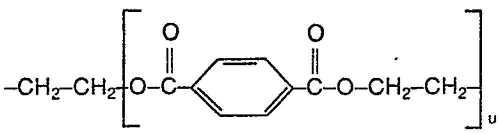

worin u eine ganze Zahl von 1 bis 7 bedeutet.

Die Herstellung dieser Polyesterpolycarbonsäuren kann nach bekannten Verfahren in der Regel so erfolgen, dass die Polycarbonsäuren und Polyole zusammen aufgeschmolzen werden und das freiwerdende Wasser eventuell durch Anlegen von Vakuum bzw. durch Ausblasen mit Stickstoff entfernt wird. Der Reaktionsverlauf kann dabei durch Titration der überschüssigen Carboxylgruppen verfolgt werden, so dass das Ende der Reaktion leicht bestimmt werden kann.

Selbstverständlich können auch Hydroxylgruppen enthaltende Polyester, die nach bekannten Verfahren aus Polycarbonsäuren, -anhydriden, -säurechloriden und/oder -alkylestern und Polyolen hergestellt werden, mit Polycarbonsäuren und -anhydriden zu den Polyesterpolycarbonsäuren umgesetzt werden. Es ist natürlich auch möglich, solche hydroxylgruppenhaltige Polyester mit niedermolekularen sauren, d.h. carboxylgruppenhaltigen, Polyestern zu den Polyesterpolycarbonsäuren umzusetzen.

Eine weitere Gruppe von zur Salzbildung zu verwendenden carboxylgruppenhaltigen Polymeren stellen die carboxylgruppenhaltigen Copolymerisate dar, welche aus copolymerisierten Einheiten von 2–25 Gewichtsteilen mindestens einer copolymerisierbaren α,β-ethylenisch ungesättigten Carbonsäure mit 3–5 C-Atomen und 75–98 Gewichtsteilen mindestens eines weiteren copolymerisierbaren Monomeren bestehen. Die α,β-ethylenisch ungesättigten Carbonsäuren können Monocarbonsäuren oder Dicarbonsäuren oder Halbester der Dicarbonsäuren mit 1–12 C-Atomen in der Alkoholkomponente sein.

Als bevorzugte copolymerisierbare Monomere seien genannt:

I) Maleinsäurediester und Ester der Acryl- oder Methacrylsäure mit aliphatischen $C_1$–$C_{12}$-, cycloaliphatischen $C_5$–$C_6$- oder araliphatischen $C_7$–$C_8$-Monoalkoholen, beispielsweise
Methylacrylat, Ethylacrylat, n-Propylacrylat,
Isopropylacrylat, n-Butylacrylat,
tert.-Butylacrylat, 2-Methylhexylacrylat,
2-Ethylhexylacrylat, Dodecylacrylat
und die entsprechenden Methacrylsäureester und Maleinsäurediester; Cyclopentylacrylat, Cyclohexylacrylat oder die entsprechenden Methacrylsäureester und Maleinsäurediester; Benzylacrylat, β-Phenylethylacrylat, entsprechende Methacrylsäureester und Maleinsäurediester;

II) Aromatische Vinyl- und Vinylidenverbindungen, beispielsweise
Styrol, α-Methylstyrol,
α-Methyl-p-isopropylstyrol,
α-Methyl-m-isopropylstyrol,
o- und p-Chlorstyrol, o- und p-Bromstyrol,
kernsubstituierte Methylstyrole, p-tert.-Butylstyrol oder deren Mischungen;

III) Vinylester organischer Monocarbonsäuren, wobei die Säurekomponente 2–4 C-Atome enthält, wie Vinylacetat und Vinylpropionat;

IV) monoolefinisch ungesättigte Halogenkohlenwasserstoffe, wie Vinylchlorid oder Vinylidenchlorid, vorzugsweise Vinylchlorid;

V) Acrylnitril, Methacrylnitril, Acrylamid, Methacrylamid;

VI) Vinylalkylether mit 1–4 C-Atomen in der Alkylgruppe, wie Vinylmethylether, Vinylethylether, Vinylpropylether, Vinylbutylether.

Bevorzugte carboxylgruppenhaltige Copolymerisate bestehen aus polymerisierten Einheiten von

a) 0–80 Gew.-% Styrol, α-Methylstyrol, o- und/oder p-Chlor-styrol, o- und/oder p-Bromstyrol, p-tert.-Butylstyrol oder deren Mischungen, vorzugsweise Styrol,

b) 0–98 Gew.-% Acrylsäureester mit aliphatischen $C_1$–$C_8$-Alkoholresten oder Methacrylsäu-

reester mit aliphatischen $C_1$–$C_8$-Alkoholresten oder deren Mischungen und

c) 2–25 Gew.-% Acrylsäure, Methacrylsäure, Itaconsäure-, Maleinsäure- und Fumarsäurehalbester mit 1–8 C-Atomen in der Alkoholkomponente oder deren Mischungen, vorzugsweise Acrylsäure und/oder Methacrylsäure,

wobei die Summe der Prozentgehalte von a bis c 100 beträgt. Anstelle von c) können auch 2–25 Gew.-% Reste mindestens eines Hydroxylgruppen enthaltenden, olefinisch ungesättigten, copolymerisierbaren Monomeren wie Hydroxyalkylester der Acryl-, Methacryl-, Malein-, Fumar- oder Itaconsäure mit 2 bis 4 C-Atomen im Alkoholrest im Copolymerisat vorhanden sein.

Bei der Verwendung der Hydroxylgruppen enthaltenden Monomeren werden Hydroxylgruppen enthaltende Copolymerisate erhalten, die durch Umsetzung mit Carbonsäureanhydriden, wie z.B. Bernsteinsäureanhydrid, in carboxylgruppenhaltige Copolymerisate überführt werden können.

Unter Copolymerisaten werden nicht nur Copolymerisate mit statistischer Verteilung der einpolymerisierten Monomeren oder Blockcopolymerisate verstanden, sondern auch Pfropfcopolymerisate, bei denen auf ein vorgebildetes Homo- und Copolymerisat Monomere aufgepfropft worden sind. Statistische Copolymerisate sind bevorzugt.

Die Herstellung der zur Salzbildung zu verwendenden carboxylgruppenhaltigen Copolymerisate erfolgt nach bekannten Verfahren, wie Masse-, Lösungs-, Dispersions- und Perlpolymerisation, vorzugsweise durch Lösungs- oder Massepolymerisation. Derartige Verfahren sind beispielsweise in «Methoden der Organischen Chemie» (Houben-Weyl), 4. Auflage, Band 14/1, Seiten 24–556, Georg Thieme Verlag, Stuttgart, 1961, bzw. in den DE-OS 2 600 318 und DE-OS 1 965 740 beschrieben.

Bevorzugte Guanidine A sind z.B.

N-Methyl-guanidin,
N-Ethyl-guanidin,
N-Butyl-guanidin,
N-Methyl-N′-ethyl-guanidin,
N,N′-Dimethyl-guanidin,
N,N′-Diethyl-guanidin,
N-Methyl-N′-isopropyl-guanidin,
N,N′-Dibutyl-guanidin,
N,N,N′-Trimethyl-guanidin,
N,N,N′,N′-Tetramethyl-guanidin,
N,N,N′,N′-Tetraethyl-guanidin,
N-Phenyl-guanidin,
N,N′-Diphenyl-guanidin,
N,N′-Ditolyl-guanidin,
N-Formyl-guanidin und
N-Butyryl-guanidin.

Bevorzugte Tetrahydropyrimidine B sind z.B.

2-Methyl-tetrahydropyrimidin,
2,4-, 2,5- und 2,6-Dimethyl-tetrahydropyrimidin,
2-Ethyltetrahydropyrimidin,
2-Ethyl-4-methyl-tetrahydropyrimidin,
2-Benzyl-tetrahydropyrimidin,
2-Phenyl-tetrahydropyrimidin,
2-Phenyl-4-methyl-, -5-methyl- und -6-methyltetrahydropyrimidin,
2,4-Diaza-3-phenyl-7,9,9- und -7,7,9-trimethylbicyclo(4,3,0)-nonen-2,
2,4-Diaza-3-methyl-7,9,9- und -7,7,9-trimethylbicyclo(4,3,0)-nonen-2
und Gemische dieser Tetrahydropyrimidine.

Die aus gegebenenfalls substituierten 1,3-Diaminocyclohexanen zu gewinnenden bicyclischen Amidine C sind im Sinne der Erfindung besonders geeignete Verbindungen. Besonders bevorzugt sind jene Produkte mit $R^{23}$ = Methyl und $R^{24}$ = H, 2-Ethylhexyl, Stearyl, Phenyl.

Die organischen Stickstoffbasen können auch als ungereinigte Rohprodukte eingesetzt werden, da die Nebenprodukte in der Regel nicht stören.

Die Herstellung der erfindungsgemässen reaktiven carboxylgruppenhaltigen Polymeren erfolgt dadurch, dass während oder nach der Synthese der carboxylgruppenhaltigen Polymeren die organische Stickstoffbase dem carboxylgruppenhaltigen Polymeren zugesetzt wird.

Als Härter für die erfindungsgemässen reaktiven carboxylgruppenhaltigen Polymeren zu verwendende Polyepoxide sind Verbindungen mit mehr als einer 1,2-Epoxidgruppe pro Molekül, z.B. Triglycidylisocyanurat (TGIC), Triglycidylurazol (TGUZ), Glycidylether (wie die auf Basis von Bisphenol-A) und Glycidylester (wie die der Phthalsäure, Tetrahydro- und Hexahydrophthalsäure) mit einem Schmelzpunkt von 50 bis 120 °C und einem Epoxidäquivalent von 170 bis 4000, vorzugsweise von 400 bis 2000.

Das molare Mischungsverhältnis von erfindungsgemässem reaktivem carboxylgruppenhaltigem Polymeren zu Epoxidhärter wird in der Regel so gewählt, dass auf die Summe freier Carboxylgruppen und mit den organischen Stickstoffbasen umgesetzter Carboxylgruppen 0,6 bis 1,5, vorzugsweise 0,8 bis 1,25, Epoxidgruppen kommen.

Pulverlackhilfsmittel und -zusätze, wie z.B. Pigmente, Farbstoffe, Füllstoffe, Verlaufsmittel, Thixotropiermittel, Entlüftungsmittel, UV-Stabilisatoren und Oxidationsinhibitoren und Quencher (Radikal-Fänger, wie z.B. N-alkylsubstituierte Piperidine) sowie Mattierungsmittel und solche Mittel, die die Oberflächenglätte verbessern, können selbstverständlich, wie üblich, eingearbeitet werden.

Die Herstellung von Pulverlacken geschieht üblicherweise wie folgt:

Das erfindungsgemässe reaktive carboxylgruppenhaltige Polymere wird mit dem gewählten Polyepoxid und gegebenenfalls weiteren Zusätzen zunächst gemischt und in der Schmelze homogenisiert. Dies kann in geeigneten Aggregaten, wie z.B. beheizbaren Knetern, vorzugsweise jedoch durch Extrudieren, erfolgen, wobei die Extrusionstemperatur so zu wählen ist, dass ein Maximum an Scherkraft auf die Mischung einwirkt. Dabei sollte eine Temperaturobergrenze von 140 °C nicht überschritten werden.

Die extrudierte Masse wird nach Abkühlung auf Raumtemperatur und nach einer geeigneten Vorzerkleinerung zu einem Pulverlack gemahlen, wobei je nach dem Verwendungszweck mittlere Teilchengrössen von ca. 40–90 µm, vorzugsweise jedoch ca. 50 µm, angestrebt werden. Ein eventuell vorhandener Grobkornanteil von Teilchengrössen von mehr als 90 µm kann durch Absieben entfernt werden.

Das Auftragen der so hergestellten Pulverlacke auf geeignete Substrate kann nach bekannten Verfahren, wie z.B. durch elektrostatisches Pulversprühen, Wirbelsintern, elektrostatisches Wirbelsintern sowie im Flammspritzverfahren oder durch das Auftragen von wässriger Suspension auf beliebige Art, erfolgen.

Nach dem Auftragen des Pulverlackes nach einem der genannten Verfahren werden die beschichteten Werkstücke zur Aushärtung auf Temperaturen von 140 °C bis 190 °C erhitzt, wobei sich die Zeitdauer der Erhitzung im wesentlichen nach der Wärmekapazität des beschichteten Werkstükkes oder dessen Temperatur vor der Beschichtung richtet.

Ein wesentlicher Vorteil der erfindungsgemässen reaktiven carboxylgruppenhaltigen Polymeren als Harzkomponente für Pulverlacke liegt in der gesteigerten Reaktivität gegenüber den Produkten der DE-OS 2 324 696. Darüber hinaus werden durch das erfindungsgemässe Vorgehen weitere Vorteile erzielt, so zum einen die ausgezeichnete Verträglichkeit der beiden Komponenten Harz und Härter, ausgezeichneter Verlauf der resultierenden Beschichtungen sowie zum anderen die problemlose Herstellbarkeit der Pulverlackgemische als Folge der Tatsache, dass die erfindungsgemässen reaktiven carboxylgruppenhaltigen Polymeren gleichzeitig Katalysatoren für die Härtung sind, die katalytische Wirkung jedoch bei den zum Mischen der Komponenten erforderlichen Temperaturen von bis zu 120 °C noch nicht wirksam wird. So wird eine unerwünschte vorzeitige Vernetzung der Komponenten, wie sie bei der Zugabe freier Katalysatoren stets möglich ist, vermieden.

Die in den nachfolgenden Beispielen erwähnten Teile sind Gewichtsteile, sofern nicht anders angegeben.

Beispiele

A. Herstellung der organischen Stickstoffbasen

I. Herstellung des Amidins C mit $R^{24}$ = Phenyl

IX:

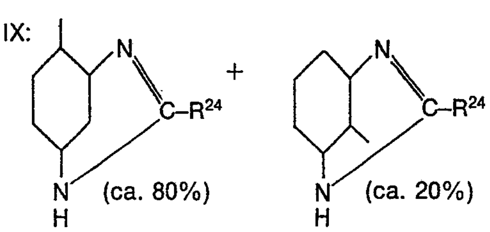

(ca. 80%) + (ca. 20%)

In einem 4 l-Dreihalskolben, versehen mit Rührer, Thermometer und Claisenbrücke mit einem 1 l-Vorlagekolben, wurden 768 g (6 Mol) 2,4-Diamino-(methylcyclohexan) (Isomerengemisch), im folgenden «PH-Tolamin» genannt, und 200 ml Wasser unter Rühren und Stickstoffatmosphäre vorgelegt. In diese wässrige Mischung wurden 732 g (6 Mol) Benzoesäure portionsweise innerhalb von 30 Minuten eingetragen. Die Temperatur stieg dabei auf 80 °C an. Sodann wurde zügig auf 250 °C aufgeheizt, wobei Wasser und überschüssiges PH-Tolamin abdestillierten. Nach 4 Stunden bei 250 °C wurde die Reaktion beendet. Das verbleibende Reaktionsprodukt wurde bei ca. 0,3 mbar destilliert (bis 240 °C). Man erhielt 733 g Rohprodukt, das zu gelblichen Kristallen erstarrte. Die Destillation des Rohproduktes ergab als Hauptlauf ($Kp_{0,3\,mbar}$ 160–195 °C) 671 g Amidin, weisse Kristalle; Fp 50–60 °C.

II. Herstellung des Amidins C mit $R^{24}$ = H

Analog Herstellung I wurden 2048 g (16 Mol) PH-Tolamin und 400 ml Wasser in 2 Stunden portionsweise mit 736 g (16 Mol) Ameisensäure versetzt. Die Temperatur stieg dabei auf 90 °C an. Dann wurde zügig auf 250 °C aufgeheizt, wobei Wasser und überschüssiges PH-Tolamin abdestillierten. Nach 4 Stunden Nachrühren bei 250 °C war die Reaktion beendet. Das verbleibende Reaktionsprodukt wurde bei ca. 0,3 mbar (bis 200 °C) destilliert. Man erhielt 806 g Rohprodukt (gelbes Öl, $Kp_{0,3}$ 120–170 °C). Die Destillation des Rohproduktes ergab als Hauptlauf ($Kp_{0,3\,mbar}$/107 bis 130 °C) 595 g gelbliches Öl, das allmählich zu einem Harz mit einem Erweichungspunkt von 45–55 °C erstarrte.

III. Herstellung des Amidins C mit $R^{24}$ = $C_{17}H_{35}$

Analog Herstellung I wurden 2048 g (16 Mol) PH-Tolamin in einem 10-l-Kessel vorgelegt. Unter Stickstoffatmosphäre und Rühren wurde in 1½ Stunden eine Lösung von 3418 g (12 Mol) Stearinsäure in 1 l Toluol zugeführt. Nach beendeter Zugabe wurde unter Abdestillieren von Toluol, überschüssigem PH-Tolamin und Kondensatwasser in 4 Stunden auf 250 °C aufgeheizt und dann 4 Stunden bei 250 °C bis zum Reaktionsende gerührt.

Man liess den Reaktionskessel auf ca. 100 °C abkühlen und trug das Reaktionsprodukt aus. Man erhielt 4450 g eines hellbraunen Wachses mit einem Erweichungsbereich von 36–44 °C. Dieses Rohprodukt kann ohne zusätzliche Reinigung weiterverwendet werden.

B. Herstellung der reaktiven carboxylgruppenhaltigen Polymeren

Reaktiver Polyester IV

Zu 1,2 kg des Carboxylpolyesters A aus Terephthalsäure, Isophthalsäure, Trimellithsäureanhydrid und Neopentylglykol mit einer Säurezahl von 35 (Fp. nach DTA: 75 °C) wurden bei 20 °C 12 g des Amidins nach Herstellung A. II zugesetzt und 30 Minuten gerührt. Dann wurde der reaktive Polyester über ein Band ausgetragen und abgeschuppt. Das fast farblose Produkt hatte eine Säurezahl von 34 und einen Fp. nach DTA von 73 °C; ca. 12% der Carboxylgruppen waren neutralisiert.

Reaktive Polyester V und VI

Analog Herstellung B. IV wurden der Schmelze des Polyesters A 12 g des Amidins nach Herstellung A. I bzw. des Amidins nach Herstellung A. III zugesetzt und die reaktiven Polyester analog gewonnen.

Die fast farblosen Produkte hatten Säurezahlen von 33,3 (Amidin nach Vorschrift I, ca. 5% der Carboxylgruppen neutralisiert) bzw. 33,0 (Amidin nach Herstellung A. III, ca. 4% der Carboxylgruppoen neutralisiert).

Reaktive Polyester VII bis IX

Analog Herstellung B. IV wurden verschiedene Carboxylpolyester mit dem Amidin nach Herstellung A. III teilneutralisiert. Die Polyester und die teilneutralisierten Folgeprodukte entsprechen der nachstehenden Übersicht.

| | Polyester*) | vor Salzbildung Säurezahl | Fp. (DTA) | nach Salzbildung Säurezahl | Fp. (DTA) | NG (%)**) |
|---|---|---|---|---|---|---|
| VII | B, aus TPS, IPS, NPG, Dimethylolcyclohexan | 50 | 71 °C | 48 | 69 °C | 3 |
| VIII | C, aus TPS, IPS, TMSA, NPG, EG, Hexandiol-1,6 | 30 | 65 °C | 28 | 63 °C | 5 |
| IX | D, aus TPS, IPS, NPG, EG, Glycerin | 45 | 73 °C | 43 | 70 °C | 3 |

**) Neutralisationsgrad der Carboxylgruppen
*) TPS = Terephthalsäure
IPS = Isophthalsäure
TMSA = Trimellithsäureanhydrid
NPG = Neopentylglykol
EG = Ethylenglykol

C. Herstellung von Pulverlacken

Beispiel 1

60,9 Teile des reaktiven Carboxylpolyesters nach Herstellung B. IV wurden mit 4,6 Teilen Triglycidylisocyanurat sowie mit 33 Teilen eines hochbeständigen Titandioxid-Rutils und mit 0,4 Teilen eines Verlaufmittels auf Basis eines Acrylatoligomeren zunächst trocken gemischt. Diese Mischung wurde auf einem Laborextruder bei Temperaturen von 80–120 °C in der Schmelze dispergiert. Das Extrudat wurde nach Abkühlung und Vorzerkleinerung auf einer Gebläsemühle auf eine durchschnittliche Korngrösse von 50 µm zu einem Pulverlack gemahlen. Nach Absieben des vorhandenen Grobkornanteils von Teilchengrössen oberhalb 90–100 µm wurde der gebrauchsfertige Pulverlack auf doppelt dekapierte, entfettete Prüfbleche (Länge 16,5 cm, Breite 65 mm, Stärke 0,8 mm) mit einer elektrostatischen Sprühvorrichtung bei einer Negativspannung von ca. 60 kV aufgesprüht. Die Pulverlacke wurden anschliessend bei 140 °C, 160 °C und 180 °C eingebrannt.

Die Beschichtungen wurden in einer Stärke von 50 µm (± 5 µm) nach den folgenden praxisüblichen Methoden auf ihre Eigenschaften geprüft:
Erichsentiefung (DIN 53 156) → «Tiefung»
Glanz, 60° (DIN 67 530) → «Glanz»
Impact reverse (Kugel ∅ 12,7 mm) → IMR 1 kg
Acetonfestigkeit, beurteilt nach folgender Abstufung:

| | |
|---|---|
| –1 ... –5 | Anzahl Hübe mit Aceton getränktem Wattebausch bis zum Durchscheuern des Lackfilms, |
| 2 m | nach 50 Hüben matter, weicher Film, |
| 2 lm | nach 50 Hüben leicht matter, weicher Film, |
| 2 | weicher Film nach 50 Hüben, |
| 1 | leicht oberflächenempfindlicher Lackfilm nach 50 Hüben, |
| 0 | keine Veränderungen. |

Die Gitterschnittprüfung nach DIN 53 151 ergab in allen Beispielen und Vergleichsversuchen die gute Beurteilung Gt 0/0.

Beispiele 2–6

Analog Beispiel 1 wurden verschiedene Polyester, teilneutralisiert mit verschiedenen Amidinen nach Herstellungen B. V–IX, zur Herstellung von Pulverlacken eingesetzt und die erhaltenen Beschichtungen, wie in Beispiel 1 beschrieben, geprüft.

Die Charakterisierung der Polyester und die Eigenschaften der Beschichtungen sind in der Tabelle aufgeführt.

Tabelle 1

| | | Bsp. 1 | Bsp. 2 | Bsp. 3 | Bsp. 4 | Bsp. 5 | Bsp. 6 |
|---|---|---|---|---|---|---|---|
| eingesetzter Polyester | | A, Vorschrift IV | A, Vorschrift V | A, Vorschrift VI | B, Vorschrift VII | C, Vorschrift VIII | D, Vorschrift IX |
| Gelierzeit bei 180 °C (sec.) | | 109 | 103 | 67 | 122 | 178 | 133 |
| Tiefung (mm) | 30 min/140 °C | >10 | >10 | >10 | >10 | >10 | >10 |
| | 10 min/160 °C | >10 | >10 | >10 | >10 | 8,3 | >10 |
| | 15 min/180 °C | >10 | >10 | >10 | >10 | >10 | 9,1 |
| IMR (cm kg) | 30 min/140 °C | 40 | 90 | 150 | –5 | –5 | 10 |
| | 10 min/160 °C | 60 | 80 | 150 | –5 | –5 | –5 |
| | 15 min/180 °C | 150 | 150 | 150 | 10 | 60 | 90 |
| Glanz (60° ∢) | 30 min/140 °C | 88 | 83 | 74 | 94 | 93 | 96 |
| | 10 min/160 °C | 92 | 90 | 81 | 94 | 95 | 96 |
| | 15 min/180 °C | 91 | 92 | 88 | 93 | 96 | 96 |
| Acetonfestigkeit | 30 min/140 °C | 2 | 2 m | 0–1 | 2 m | 2 m | 2 m |
| | 10 min/160 °C | 2 | 2 m | 0–1 | 2 m | 2 m | 1 |
| | 15 min/180 °C | 1 | 2 m | 2 | 2 | 2 | 1 |

**Patentansprüche**

1. Reaktive carboxylgruppenhaltige Polymere mit mittleren Molekulargewichten $\bar{M}_n$ von 2500 bis 25 000, wobei 0,1 bis 25% der zunächst vorhandenen Carboxylgruppen der Polymeren als Salz mindestens einer organischen Stickstoffbase vorliegen, dadurch gekennzeichnet, dass die organische Stickstoffbase entweder

A. ein Guanidin der Formel

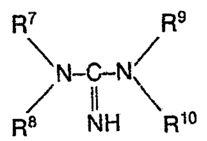

worin
$R^7$, $R^8$, $R^9$, $R^{10}$ unabhängig voneinander ein Wasserstoffatom, einen $C_1$–$C_{12}$-Alkylrest, einen $C_5$–$C_{12}$-Cycloalkylrest, einen $C_7$–$C_{12}$-Aralkylrest, einen $C_6$–$C_{12}$-Arylrest, vorzugsweise einen $C_1$–$C_4$-Alkylrest und einen Phenylrest, bedeuten,
oder

B. ein Tetrahydropyrimidin der Formel

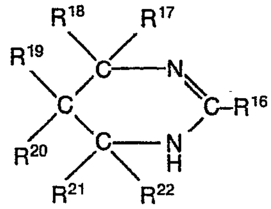

worin
$R^{16}$ bis $R^{22}$ unabhängig voneinander ein Wasserstoffatom, einen Alkylrest mit 1 bis 6 C-Atomen, einen Cycloalkylrest mit 5 bis 10 C-Atomen, einen Aralkylrest mit 7 bis 12 C-Atomen und einen Arylrest mit 6 bis 15 C-Atomen bedeuten,
wobei auch zwei geminale oder vicinale Substituenten zusammen mit dem Kohlenstoffatom, an dem sie sitzen, einen cycloaliphatischen Ring mit 5 bis 6 C-Atomen bilden können,
oder

C. ein bicyclisches Amidin der Formel

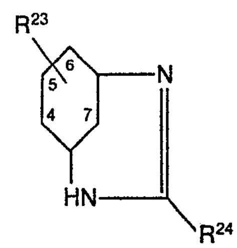

ist, worin
$R^{23}$ ein Wasserstoffatom oder eine Methylgruppe und
$R^{24}$ ein Wasserstoffatom, eine $C_1$–$C_{22}$-Alkylgruppe oder einen Phenylrest bedeuten.

2. Polymere nach Anspruch 1, dadurch gekennzeichnet, dass sie Polyesterpolycarbonsäuren sind.

3. Polymere nach Ansprüchen 1 und 2, dadurch gekennzeichnet, dass 2 bis 15% der zunächst vorhandenen Carboxylgruppen der Polymeren als Salz vorliegen.

4. Verfahren zur Herstellung der Polymeren nach Ansprüchen 1–3, wobei man mindestens ein carboxylgruppenhaltiges Polymeres mit mittleren Molekulargewichten $\bar{M}_n$ von 2500 bis 25 000 und mit Säurezahlen von 10 bis 150 mit mindestens einer organischen Stickstoffbase bei einer Temperatur von 170 bis 250 °C in solchen Mengenverhältnissen umsetzt, dass 0,1 bis 25% der Carboxylgruppen des Polymeren mit der Stickstoffbase unter Salzbildung reagieren, dadurch gekennzeichnet, dass die organische Stickstoffbase A, B oder C – definiert wie in Anspruch 1 – ist.

5. Verwendung der Polymeren nach Ansprüchen 1–3 als Bindemittelkomponente für Pulverlacke, die durch Polyepoxide gehärtet werden.

## Claims

1. Reactive polymers containing carboxyl groups and having average molecular weights $\bar{M}_n$ of 2,500 to 25,000, 0.1 to 25% of the initially present carboxyl groups of the polymers being present in the form of a salt of at least one organic nitrogen base, characterised in that the organic nitrogen base is either

A. a guanidine of the formula

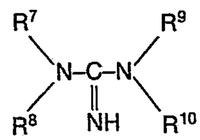

wherein
$R^7$, $R^8$, $R^9$ and $R^{10}$, independently of one another, denote a hydrogen atom, a $C_1$–$C_{12}$-alkyl radical, a $C_5$–$C_{12}$-cycloalkyl radical, a $C_7$–$C_{12}$-aralkyl radical, a $C_6$–$C_{12}$-aryl radical, preferably a $C_1$–$C_4$-alkyl radical and a phenyl radical, or

B. a tetrahydropyrimidine of the formula

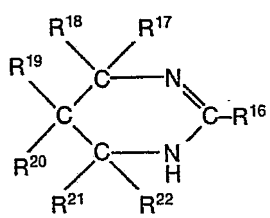

wherein
$R^{16}$ to $R^{22}$ independently of one another denote a hydrogen atom, an alkyl radical with 1 to 6 C atoms, a cycloalkyl radical with 5 to 10 C atoms, an aralkyl radical with 7 to 12 C atoms and an aryl radical with 6 to 15 C atoms,
it also being possible for two geminal or vicinal substituents, together with the carbon atom on which they are located, to form a cycloaliphatic ring with 5 to 6 C atoms, or

C. a bicyclic amidine of the formula

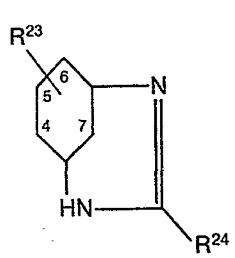

wherein
$R^{23}$ denotes a hydrogen atom or a methyl group and
$R^{24}$ denotes a hydrogen atom, a $C_1$–$C_{22}$-alkyl group or a phenyl radical.

2. Polymers according to Claim 1, characterised in that they are polyester polycarboxylic acids.

3. Polymers according to Claims 1 and 2, characterised in that 2 to 15% of the initially present carboxyl groups of the polymers are in salt form.

4. Process for the production of the polymers according to Claims 1–3, wherein at least one carboxyl-group-containing polymer having average molecular weights $\bar{M}_n$ of 2,500 to 25,000 and acid numbers of 10 to 150 is reacted with at least one organic nitrogen base at a temperature of 170 to 250 °C in such quantitative ratios that 0.1 to 25% of the carboxyl groups of the polymer react with the nitrogen base with salt formation, characterised in that the organic nitrogen base is A, B or C – defined as in Claim 1.

5. Use of the polymers according to Claims 1–3 as binder component for powder lacquers which are hardened by polyepoxides.

## Revendications

1. Polymères porteurs de groupes carboxyle réactifs ayant des poids moléculaires moyens $\bar{M}_n$ de 2500 à 25 000, dont 0,1 à 25% des groupes carboxyle initialement présents existent sous la forme de sel d'au moins une base organique azotée, caractérisés en ce que la base organique azotée est ou bien

A. Une guanidine de formule

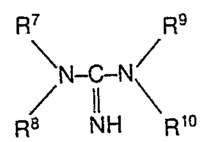

dans laquelle
$R^7$, $R^8$, $R^9$, $R^{10}$ représentent indépendamment les uns des autres un atome d'hydrogène, un reste alkyle en $C_1$ à $C_{12}$, un reste cycloalkyle en $C_5$ à $C_{12}$, un reste aralkyle en $C_7$ à $C_{12}$, un reste aryle en $C_6$ à $C_{12}$, de préférence un reste alkyle en $C_1$ à $C_4$ et un reste phényle, ou bien

B. Une tétrahydropyrimidine de formule

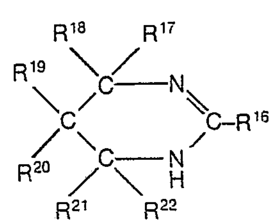

dans laquelle
$R^{16}$ à $R^{22}$ représentent indépendamment les uns des autres un atome d'hydrogène, un reste alkyle ayant 1 à 6 atomes de carbone, un reste cycloalkyle ayant 5 à 10 atomes de carbone, un reste aralkyle ayant 7 à 12 atomes de carbone et un reste aryle ayant 6 à 15 atomes de carbone,
deux substituants géminés ou vicinaux pouvant

également former conjointement avec l'atome de carbone qui les porte, un noyau cycloaliphatique de 5 ou 6 atomes de carbone,
ou bien

C. Une amidine bicyclique de formule

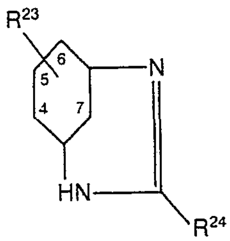

dans laquelle

$R^{23}$ est un atome d'hydrogène ou un groupe méthyle et

$R^{24}$ est un atome d'hydrogène, un groupe alkyle en $C_1$ à $C_{22}$ ou un reste phényle.

2. Polymères suivant la revendication 1, caractérisés en ce qu'ils sont des polyester-polyacides carboxyliques.

3. Polymères suivant les revendications 1 et 2, caractérisés en ce que 2 à 15% des groupes carboxyle des polymères initialement présents existent sous forme de sel.

4. Procédé de production des polymères suivant les revendications 1 à 3, dans lequel on fait réagir au moins un polymère porteur de groupes carboxyle ayant des poids moléculaires moyens $\bar{M}_n$ de 2500 à 25 000 et des indices d'acide de 10 à 150 avec au moins une base organique azotée, à une température de 170 à 250 °C dans des rapports quantitatifs choisis de manière que 0,1 à 25% des groupes carboxyle du polymère réagissent avec la base azotée avec formation d'un sel, caractérisé en ce que la base organique azotée est A, B ou C comme défini dans la revendication 1.

5. Utilisation des polymères suivant les revendications 1 à 3 comme composant liant pour laques en poudre qui sont durcies par des polyépoxydes.